# EUROPÄISCHE PATENTSCHRIFT

(11) **EP 3 117 130 B1**
(45) Veröffentlichungstag und Bekanntmachung des Hinweises auf die Patenterteilung: **19.06.2019**
(21) Anmeldenummer: 15741739.5
(22) Anmeldetag: 10.03.2015
(51) Int. Cl.: F16K 31/06

(54) **ELEKTROMAGNETISCH BETÄTIGBARE VENTILVORRICHTUNG UND VERWENDUNG EINER SOLCHEN**
ELECTROMAGNETICALLY ACTUATABLE VALVE DEVICE AND USE THEREOF
SYSTÈME DE VANNE À COMMANDE ÉLECTROMAGNÉTIQUE ET SON UTILISATION

(30) Priorität: 12.03.2014 DE 102014103352
(43) Veröffentlichungstag der Anmeldung: 18.01.2017
(73) Patentinhaber: ETO MAGNETIC GmbH, 78333 Stockach (DE)
(72) Erfinder: VINCON, Peter, 78333 Stockach (DE)
(74) Vertreter: Patentanwälte Behrmann Wagner PartG mbB
(86) Internationale Anmeldenummer: PCT/EP2015/054969
(87) Internationale Veröffentlichungsnummer: WO 2015/135943

(56) Entgegenhaltungen:
- DE-A1-102005 037 193
- DE-A1-102013 016 272

## Beschreibung

Die vorliegende Erfindung betrifft eine elektromagnetisch betätigbare Ventilvorrichtung nach dem Oberbegriff des Hauptanspruchs, wie sie aus der DE 10 2005 037 193 A1 bekannt ist. Ferner betrifft die vorliegende Erfindung eine Verwendung einer derartigen elektromagnetisch betätigbaren Ventilvorrichtung.

Elektromagnetische Aktorprinzipien werden für vielfältige Betätigungs- und Stellaufgaben genutzt; ein Schwerpunkt derartiger Technologien ist die elektromagnetische Ventilbetätigung, bei welcher durch Bestromung einer typischerweise stationären Spuleneinheit eine ein geeignetes Öffnen oder Verschließen eines Ventilsitzes bewirkende Ankereinheit angetrieben wird. Neben konstruktiver Einfachheit und einfacher Ansteuerbarkeit sind es insbesondere günstige Betriebseigenschaften und hohe Betriebs-Zykluszahlen, welche elektromagnetische Aktorprinzipien für das Stellen einer Ventilvorrichtung, etwa in einem Fahrzeugkontext, als besonders geeignet erscheinen lassen.

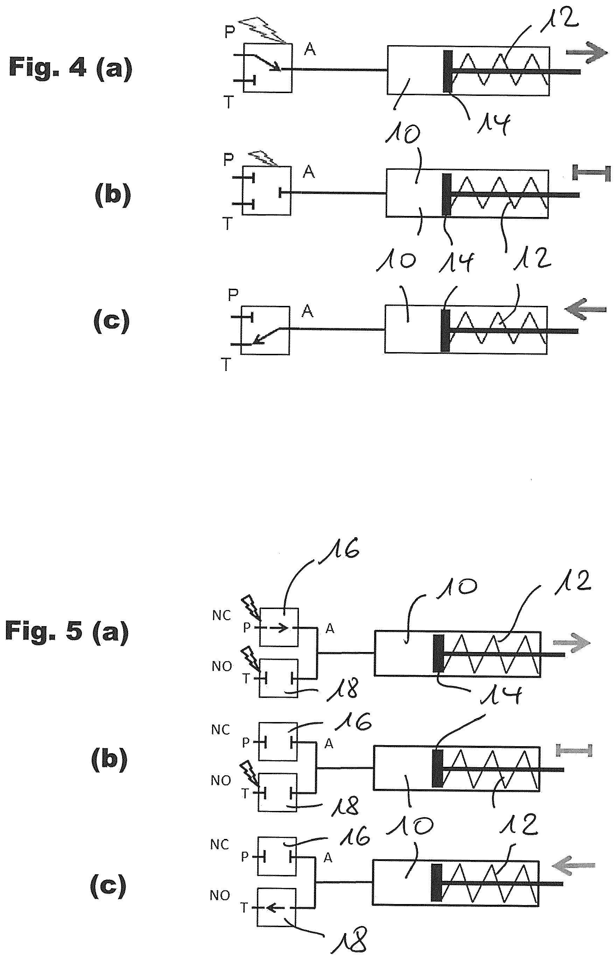

Die Fig. 5 zum heranzuziehenden und als allgemein bekannt vorauszusetzenden Stand der Technik verdeutlicht einen üblichen, generischen Anwendungsfall einer elektromagnetisch betätigbaren Ventiltechnologie. Ein in einem Stellzylinder 10 gegen eine Rückstellkraft einer Druckfeder 12 geführter Stellkolben 14 wird durch einströmendes Fluid betätigt und bewegt sich in der in Fig. 5(a) gezeigten Weise entlang der Pfeilrichtung aus dem Zylindergehäuse 10 heraus; über einen Fluid-Arbeitsanschluss A zweier verbundener 2/2-Ventileinheiten 16, 18 in den Zylinder 10 strömendes Fluid bewirkt die Stößelbewegung entgegen der Rückstellkraft der Druckfeder 12. Aktiviert wird dieser Betriebszustand durch das obere 2/2-Ventil 16, welches als NC-Typ (NC = normal closed = geschlossen im stromlosen Zustand) ausgeführt ist; der in der Teilfigur (a) gezeigte Befüllungszustand des Zylinders 10 erfolgt insoweit dann als Reaktion auf eine Aktivierung (Bestromung) der elektromechanischen Aktuatorkomponenten des oberen Ventils 16. Das über den gemeinsamen Anschluss A verbundene zweite Ventil 18 (Typ NO = normal offen = geöffnet im stromlosen Zustand) ist bestromt und geschlossen, verhindert also ein Rückfließen des Fluids durch dieses Ventil.

Die mittlere Teilfigur (b) verdeutlicht einen stabilen Stell- bzw. Vorschubzustand des Stellkolbens 14, nachdem das Ventil 16 nach dessen Deaktivierung sperrt und mithin ein Zurückfließen des Fluids sperrt. Das Ventil 18 bleibt bestromt und sperrt weiterhin, so dass - bei reduziertem Stromverbrauch gegenüber (a), lediglich ein Ventil ist bestromt - kein Fluid fließt und der Kolben in Position verbleibt.

Die Teilfigur 5(c) verdeutlicht den zurückführenden Betriebszustand: eine Deaktivierung von Ventil 16 führt zur Sperrung, während eine Deaktivierung des Ventils 18 dieses durchschaltet, so dass Fluid durch Wirkung des Federkraft-beaufschlagten Stellkolbens 14 über den Anschluss A aus dem Fluidanschluss T austreten kann. Dies stellt damit die Fail-safe-Position, also die selbst bei einem Stromausfall sicher erreichte bzw. eingenommene Position der Vorrichtung dar.

Im Ergebnis erreicht damit die in der Fig. 5 gezeigte Konfiguration einen elektromagnetisch aktivierten Stellbetrieb mit minimiertem elektrischen Energieeinsatz und durch die Feder vorgegebener (Rück-)Stellposition.

Deutlich wird jedoch aus dem Funktionsdiagramm der Fig. 5, dass zur Realisierung dieser Funktionalität eine Anordnung aus zwei Ventilen notwendig ist (welche typischerweise als 2/2-Wegeventile auszuführen sind), mit den dadurch verbundenen Nachteilen erhöhten Herstellungs-, Ansteuerungs-, Betriebs- und Verbindungsaufwand.

Aufgabe der vorliegenden Erfindung ist es daher, eine dem Betriebsverhalten der Fig. 5 äquivalente, elektromagnetisch betätigbare Ventilvorrichtung zu schaffen, welche sich in lediglich einem Ventil (bzw. durch Betätigung mit lediglich einer elektromagnetisch angetriebenen Ankereinheit) realisieren lässt. Dabei soll insbesondere eine Funktionalität realisierbar sein, welche, insoweit analog Fig. 5(c) einen definierten, stromlos stabilen Zustand ermöglicht, um insoweit auch die vorbekannten energetischen Vorteile zu realisieren.

Die Aufgabe wird durch die elektromagnetisch betätigbare Ventilvorrichtung mit den Merkmalen des Hauptanspruchs gelöst; vorteilhafte Weiterbildungen der Erfindung sind in den Unteransprüchen beschrieben. Im Rahmen der Erfindung wird gleichermaßen Schutz beansprucht für eine vorteilhafte Verwendung einer derartigen elektromagnetisch betätigbaren Ventilvorrichtung zur Realisierung eines 3/3-Wegeventils (also einem Ventil mit drei Anschlüssen und drei Schaltstellungen), um insoweit unmittelbar die Funktionalität der aus dem Stand der Technik bekannten Konfiguration zweier 2/2-Wegeventile gemäß Fig. 5 in optimierter Weise nachzubilden.

In erfindungsgemäß vorteilhafter Weise sieht die Erfindung zunächst vor, die zum gesteuerten Öffnen bzw. Verschließen der Fluidanschlüsse mittels zugeordneter Verschlusseinheiten ausgebildete Ankereinheit nicht nur zwischen zwei axial-stirnseitigen Endpositionen entlang eines Anker-Bewegungspfads anzutreiben, sondern zusätzlich eine Anker-Zwischenposition vorzusehen. Weiterhin erfindungsgemäß vorteilhaft sind die der Ankereinheit zugeordneten Verschlusseinheiten für den ersten bzw. zweiten Fluidanschluss so ausgebildet, dass in dieser Anker-Zwischenposition die Verschlusseinheiten den jeweils zugehörigen Fluidanschluss verschließen. Damit erreicht die vorliegende Erfindung die Wirkung, dass in dieser Anker-Zwischenposition ein Fluidfluss vollständig unterbrochen ist und insoweit ein (bevorzugt dann durch die erfindungsgemäße Ventilvorrichtung anzutreibender) Stellkolben in seiner Stellposition verbleibt, selbst wenn dieser mit einer mechanischen Rückstellkraft einer zugeordneten Rückstellfeder beaufschlagt ist.

Dagegen erreicht die vorliegende Erfindung, dass in der ersten Anschlagposition stromlos eine Öffnung des zweiten Fluidanschlusses bewirkt ist, mithin also etwa ein nachgeschalteter Stellkolben durch die Rückstellfeder in eine stromlos stabile Ausgangsposition verbracht werden kann; im Sinne eines sicheren Betriebsmodus (Fail Safe) kann insoweit auch bei einem Stromausfall ein sicherer Betriebsmodus gewährleistet werden.

Zusätzlich vorteilhaft ist erfindungsgemäß vorgesehen, dass mindestens eine der ersten und zweiten Verschlusseinheiten axial bewegbar an oder in der Ankereinheit geführt ist, wobei durch die erfindungsgemäßen zweiten Federmittel (jeweils) eine Vorspannung in Richtung auf den zugeordneten der Fluidanschlüsse erfolgt. Durch diese Maßnahme ist in konstruktiv besonders einfacher und günstiger Weise der vorbeschriebene Betriebsmodus in der Anker-Zwischenposition erreichbar, in welcher erfindungsgemäß ein gemeinsames Verschließen auch von zwei (bevorzugt einander axial gegenüberliegenden) Fluidanschlüssen ermöglicht ist.

Erfindungsgemäß weiterbildend sind diese (dann wiederum weiterbildungsgemäß axial geführten und bewegbaren) Verschlusseinheiten jeweils endseitig mit Verschluss- und/oder Dichtmitteln versehen, so dass im Zusammenwirken mit den gegenüberliegend-axial vorgesehenen Fluidanschlüssen im Ventilgehäuse (welche dann geeignet als Ventilsitz wirken) ein konstruktiv einfaches Dichten ermöglicht ist.

Gerade die weiterbildungsgemäß vorteilhafte Ausgestaltung, bei welcher sich die Ankereinheit in ihrer Ventilbetätigung zwischen axial-stirnseitigen Endpositionen mit jeweiligen Ventilsitzen bewegte, erweist sich als besonders vorteilhaft zur Realisierung des erfindungsgemäßen 3/3-Wegeventilprinzips, wobei der erfindungsgemäße weitere Fluidanschluss (welcher im Rahmen der Erfindung für die Ventilsitze dann verbunden bzw. zu verbinden ist) entsprechend dem zu verwirklichenden Prinzip als Arbeitsanschluss A gelten kann und zusammen mit dem ersten bzw. zweiten Fluidanschluss jeweils den erfindungsgemäßen, geschalteten Fluidkanal ausbildet (welcher wiederum durch die Ankereinheit jeweils geeignet begrenzt wird).

Im Rahmen besonders eleganter konstruktiver Ausgestaltungen der Erfindung ist mindestens eine der erfindungsgemäßen Verschlusseinheiten (weiter bevorzugt stirnseitig) gegen eine Rückstellkraft einer Druckfeder (zweite Federmittel im Sinne der Erfindung) im Ankerkörper der Ankereinheit federnd gehalten. Auch ist es weiterbildungsgemäß vorteilhaft, dass eine geeignete Ausgestaltung des (stirnseitigen) Durchtritts der Verschlusseinheit aus dem Ankerkörper insoweit eine Hubbegrenzung dieser Bewegung der Verschlusseinheit aus der Stirnseite des Ankerkörpers heraus bewirkt. Auf diese Weise lässt sich konstruktiv einfach, großserientauglich und hochgradig betriebssicher das jeweilige Hub- und Verschlussverhalten, wiederum bezogen auf die endseitigen Anschlagpositionen sowie die erfindungsgemäße Anker-Zwischenposition, zuverlässig einstellen und aufrechterhalten.

Für das Bewirken der erfindungsgemäßen Anker-Zwischenpositionen sind im Rahmen bevorzugter Weiterbildungen der Erfindung zahlreiche Ansätze denkbar. So ist es einerseits möglich und bevorzugt, durch geeignete Ausgestaltung einer der Spuleneinheit vorgeschalteten Steuereinheit eine geeignete Strom- und/oder Spannungssteuerung so vorzunehmen, dass durch diese Steuerung die Ankereinheit in der gewünschten Anker-Zwischenposition gehalten wird, etwa in der Art, dass lediglich eine halbe Stromstärke in die Spuleneinheit eingeprägt wird, welche dann die Ankereinheit nicht vollständig die Hubbewegung entlang des gesamten Anker-Bewegungshubs durchführen lässt. Ergänzend oder alternativ kann etwa durch geeignete Ausgestaltung der Spuleneinheit selbst (etwa in Form verschiedener, separat voneinander ansteuerbarer Wicklungen) die elektromagnetische Voraussetzung dafür geschaffen werden, dass in einem vorbestimmten Ansteuer- bzw. Schaltzustand die Ankereinheit in die Anker-Zwischenposition verbracht wird und dort in der vorgesehenen Weise agiert.

Eine besonders elegante mechanisch-konstruktive Ausbildung der Erfindung liegt in der Maßnahme, die erfindungsgemäßen ersten Federmittel mittels einer Mehrzahl von (verkoppelten) Federn zu realisieren. Dabei stützt sich eine erste Feder von einem stationären Gehäuse-Widerlagerabschnitt ab (während sie anderenends die Ankereinheit greift), während eine zweite Druckfeder, wiederum auf einen stationären Gehäuse-Widerlagerabschnitt greifend, anderenends zum axialen Mitnehmen durch die Ankereinheit ausgebildet ist, sobald die Ankereinheit einen vorbestimmten Ankerhub durchfahren hat. Dieser bewegbare Widerlagerabschnitt ist in besonders vorteilhafter Weise als rand- bzw. mantelseitiger, weiter bevorzugt ringförmiger Gleitabschnitt ausgestaltet und kann etwa in einer geeigneten gehäuse-mantelseitigen Führung magnetisch isoliert gleiten und so eine gestufte Federwirkung auf die Ankereinheit ausüben: bis zum Erreichen des bewegbaren Widerlagerabschnitts durch die Ankereinheit wirkt diese lediglich gegen die erste Feder, und sobald dann durch die Ankereinheit axial der bewegbare Widerlagerabschnitt erreicht wird und damit das axiale Mitnehmen erfolgt, addiert sich die zusätzliche (wiederum rückstellende) Federkraft der zweiten Feder zur ersten Feder. Dabei ist es wiederum bevorzugt, wenn die Federn zueinander verschiedene Federkräfte bzw. Feder-Steifigkeiten aufweisen. Besonders bevorzugt sind diese Federeigenschaften so aufeinander bzw. auf eine elektromagnetische, auf die Ankereinheit wirkende Stellkraft eingerichtet, dass als Reaktion auf das Ansteuern der Anker-Zwischenposition (durch eine zugehörige erste elektromagnetische Stellkraft) eine Kompression der ersten Feder erfolgt, woraufhin dann die Ankereinheit in die Anker-Zwischenposition verbracht wird; erst jedoch dann als Reaktion auf eine (erhöhte) zweite elektromagnetische Stellkraft die Ankereinheit durch das axiale Mitnehmen auch die zweite Feder komprimiert und so in eine stirnseitige Endposition gebracht werden kann.

Im Ergebnis ermöglicht es damit die Erfindung vorteilhaft, die eingangs anhand der Fig. 5 skizzierte Betriebs-Funktionalität mit lediglich einer Ankereinheit zu realisieren und somit beträchtliche konstruktive, Aufwands- und Betriebsvorteile zu ermöglichen.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1 bis 3: eine Längsschnittansicht durch eine elektromagnetisch betätigbare Ventilvorrichtung gemäß einer ersten bevorzugten Ausführungsform und in drei verschiedenen Betriebszuständen;
- Fig. 4: ein Schaltbild mit drei Teildarstellungen zum Verdeutlichen der Betriebsmodi der Fig. 1 und
- Fig. 5: ein analog zum Betrieb der Fig. 4 ausgeführtes Schaltbild einer elektromagnetisch betätigbaren Ventilvorrichtung mit zwei einzelnen Elektromagnetventilen.

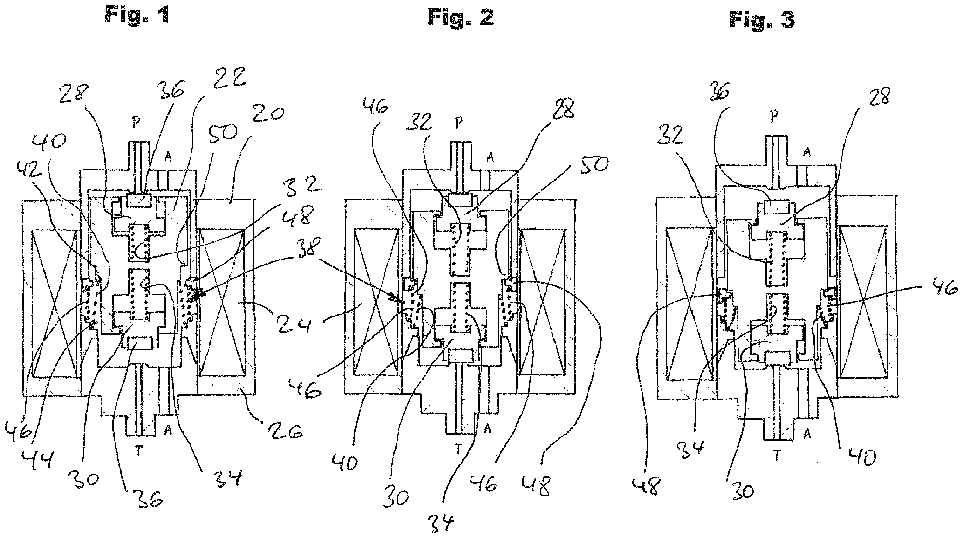

Anhand der Fig. 1 bis 3 wird zunächst der konstruktive Aufbau der elektromagnetisch betätigbaren Ventilvorrichtung des gezeigten Ausführungsbeispiels beschrieben; dessen Betriebsweise und Funktionalität entspricht dann den in den Fig. 4 dargestellten Betriebsmodi.

Innerhalb eines zylindrischen Ventilgehäuses 20 ist eine Ankereinheit 22 axial bewegbar geführt (wobei die axiale Richtung in der Figurenebene senkrecht verläuft und einer Symmetrieachse des Gehäuses 20 bzw. der Ankereinheit 22 entspricht). Die Ankereinheit 22 ist zwischen einander gegenüberliegenden axialen Endpositionen im Gehäuse 20 bewegbar, wobei die Fig. 1 einen ersten axialen Anschlagzustand und die Fig. 3 einen entsprechend gegenüberliegenden zweiten axialen Anschlagzustand verdeutlicht, während in der analogen Schnittansicht der Fig. 2 die Ankereinheit in einer Anker-Zwischenposition zwischen den axialen Endpositionen steht. Eine elektromagnetische Flussbeaufschlagung der Ankereinheit zum Bewirken dieser Axialbewegungen erfolgt durch stationäre Spulenmittel 24, welche (wiederum radialsymmetrisch) in einem Spulengehäuse 26 gehalten sind.

Jeweils axial-stirnseitig ist in der Ankereinheit eine erste bzw. zweite Verschlusseinheit 28, 30 axial bewegbar und nach auswärts vorgespannt durch die Druckkraft einer Druckfeder 32 bzw. 34 geführt. Jeweils axial stirnseitig tragen diese Verschlusskörper (Verschlusseinheiten) Dichtmittel 36, üblicherweise realisiert aus einem polymeren Material. Diese Dichtmittel 36 wirken wiederum zusammen mit einer jeweiligen Stirnseite zugeordneten Fluidanschlüssen am bzw. im Gehäuse 20, wobei ein erster Fluidanschluss P der Verschlusseinheit 28 zugeordnet ist und in der ersten Anschlagposition verschlossen ist, während ein zweiter Fluidanschluss T in der zweiten Anschlagposition von der zweiten Verschlusseinheit 30 verschlossen ist. Durch Wirkung der in der Ankereinheit axial bewegbar und federnd geführten Verschlusseinheiten 28, 30 sind zudem beide Fluidanschlüsse P, T auch in der Anker-Zwischenposition der Fig. 2 gleichzeitig verschlossen.

Den jeweiligen Fluidanschlüssen P, T radial benachbart ist im Gehäuse zudem ein weiterer Fluidanschluss A ausgebildet. Durch Wirkung einer zugehörigen Stirnseite der Ankereinheit als Begrenzung eines zugehörigen Fluidkanals kann so die Ventilvorrichtung eine geschaltete Öffnung bzw. Schließung der Verbindung P-A bzw. T-A durchführen, wobei weiter bevorzugt im Rahmen einer Verwendung der Erfindung als 3/3-Ventil der weitere Fluidanschluss A (in nicht gezeigter Weise) durcbverbunden ist. Wie die Schnittansichten der Fig. 1 bis 3 erkennen lassen, ist durch Wirkung von seitlich angreifenden Federmitteln 38 (erste Federmittel im Sinne der Erfindung) die Ankereinheit 22 gegen den Fluidanschluss P vorgespannt, verschließt diesen also, selbst wenn ein unbestromter Zustand der Spuleneinheit 24 oder undefinierter Positionszustand der Ankereinheit vorliegt, indem eine Verschluss-/Rückstellwirkung in Richtung auf diese (obere) Position erfolgt. Konkret wird dies bewirkt durch eine erste Druckfeder 40, welche sich einends (in den Figuren oben) von einem Ringabsatz 42 der Ankereinheit 22, anderenends von einem stationären, unbeweglichen Gehäuse-Ringabsatz 44 abstützt. Zusätzlich ist in den Figuren gezeigt eine zweite Druckfeder 46, welche wiederum einends auf den stationären Gehäuseabschnitt 44 greift, anderenends jedoch einen axial verschiebbaren und damit beweglichen Mitnehmerabschnitt 48 in der in Fig. 1 gezeigten Weise gegen eine Gehäusekante des Gehäuses 20 drückt. Der Vergleich der Fig. 1 mit den Fig. 2 und 3, welche eine stufenweise Abwärtsbewegung der Ankereinheit 22 (also in Richtung auf die zweite, untere stirnseitige Anschlagposition) beschreiben, verdeutlicht, wie nach dem Überschreiten der Ankerzwischenposition (Fig. 2) diese zweite Feder 46 in den Bewegungsablauf der Ankereinheit eingreift und im Hubabschnitt zwischen der Anker-Zwischenposition (Fig. 2) und der unteren, zweiten Anschlagposition (Fig. 3) zusätzlich rückstellend und gegen die abwärts gerichtete Ankerstellkraft wirkt; hierbei nimmt ein geeignet ausgebildeter Ringabsatz 50 an der Ankereinheit den bewegbaren Mitnehmerabschnitt 48 entlang der Anker-Vorschubrichtung mit und bewirkt so die Kompression der zweiten Feder 46. Entsprechend entsteht eine gestufte Kraft-Rückstellwirkung durch die Federanordnung 40, 46.

Das Schaltbild der Fig. 4 mit den gezeigten Teilbildern verdeutlicht die anhand der Fig. 1 bis 3 illustrierten Betriebsmodi, wobei das Teilbild Fig. 4(c) einen unbestromten Zustand der Ventilvorrichtung gemäß Fig. 1 verdeutlicht: die Ankereinheit steht in der ersten Anschlagposition; die erste Verschlusseinheit 28 verschließt den ersten Fluidanschluss P und unterbricht somit die Verbindung P-A, während ein Fluidfluss zwischen dem (geöffneten) zweiten Fluidanschluss T und A ermöglicht ist. In diese Betriebsposition (insoweit auch gemäß linker Pfeilrichtung von Fig. 4(c)) wird die Vorrichtung durch Wirkung der Federanordnung 38 (genauer: mit dem Erreichen der Anker-Zwischenposition lediglich durch Wirkung der Feder 44) verbracht, wenn die Spuleneinheit 24 unbestromt ist. Entsprechend entspricht dieser Betriebszustand auch dem sicheren ("Fail Safe") Betriebszustand, markiert jedoch auch den Ausgangszustand für eine Bestromung.

Dies zeigt die Fig. 4(a): Durch Bestromung der Spuleneinheit 24, etwa mittels eines hälftigen Steuerstroms (alternativ etwa durch Aussteuern lediglich einer Teilwicklung der Spuleneinheit 24) entsteht eine in der Figurenebene abwärts gerichtete Stellkraft auf die Ankereinheit, welche gegen die Rückstellkraft der ersten Feder 44 in die in Fig. 2 gezeigte Mittenposition verbracht wird. Ein Aufrechterhalten dieses Bestromungszustands (entsprechend Fig. 4(b)) sorgt dann für ein stabiles Halten dieser Position, insbesondere als der Steuerstrom nicht ausreicht, um gegen die nunmehr erforderliche zusätzliche Rückstellwirkung der zweiten Feder 46 die Ankereinheit weiter (abwärts) in Richtung auf die zweite Anschlagposition am zweiten Fluidanschluss T zu bewegen. Wird dann jedoch der Steuerstrom weiter erhöht, gelangt die Ankereinheit zur zweiten Anschlagposition der Fig. 3, wobei neben einer (weiteren) Kompression der ersten Feder 40 durch den Kraftfluss zwischen dem Ringabsatz 50 der Ankereinheit und der Mitnehmereinheit 48 eine zusätzliche (in der Kraft addierte) Kompression der zweiten Feder 46 erfolgt. In dieser Arbeitsstellung der Fig. 3 öffnet der erste Fluidanschluss P, während die zweite Verschlusseinheit 30 den zweiten Fluidanschluss T verschließt und entsprechend den Fluidfluss T-A sperrt.

Nach dem Beenden der Bestromung wird dann wiederum, siehe oben, durch Federwirkung der Einheit 38 die Ankereinheit zurück in die obere (erste) Anschlagposition verbracht.

Es wird deutlich, dass mit der vorliegenden Erfindung in effizienter Weise die Funktionalität eines 3/3-Ventils erreicht werden kann, wobei sich die vorliegende Erfindung prinzipiell für beliebige pneumatische oder hydraulische Stellzylinder mit zugehörigen Stellkolben eignet; gleichwohl sollte die vorliegende Erfindung in besonders günstiger Weise für die Regelung von Pumpen Einsatz finden.

## Patentansprüche

1. Elektromagnetisch betätigbare Ventilvorrichtung mit einem Ventilgehäuse (20), das einen ersten (P) und einen zweiten (T), jeweils zum gesteuerten Öffnen und Verschließen durch Bewegung einer zugeordneten ersten (28) bzw. zweiten (30) Verschlusseinheit der Ventilvorrichtung ausgebildeten Fluidanschluss sowie mindestens einen am Ventilgehäuse vorgesehenen, einen durch die erste und/oder zweite Verschlusseinheit unterbrechbaren Fluidkanal zum ersten bzw. zweiten Fluidanschluss ausbildenden weiteren Fluidanschluss (A) aufweist,
wobei die erste und die zweite Verschlusseinheit an oder in einer im Ventilgehäuse entlang einer Bewegungslängsachse bewegbar geführten und als Reaktion auf eine Bestromung einer stationär an einem Spulengehäuse (26) der Ventilvorrichtung vorgesehenen Spuleneinheit (24) der Ventilvorrichtung antreibbaren Ankereinheit (22) vorgesehen ist,
die zwischen einander gegenüberliegenden ersten und zweiten stirnseitigen Anschlagpositionen am Ventilgehäuse bewegbar ausgebildet ist,
wobei,
die Ankereinheit durch an das Ventilgehäuse angreifende erste Federmittel (38, 40) in die erste Anschlagposition vorgespannt ist, an welcher die erste Verschlusseinheit (28) den ersten Fluidanschluss (P) verschließt,
die Ankereinheit zum gesteuerten elektromagnetischen Verbringen in eine entlang der Bewegungslängsachse zwischen der ersten und der zweiten Anschlagposition vorgesehene Anker-Zwischenposition ausgebildet ist, an welcher die erste Verschlusseinheit den ersten Fluidanschluss und die zweite Verschlusseinheit den zweiten Fluidanschluss verschließt,
und mindestens eine der ersten und zweiten Verschlusseinheiten axial bewegbar an oder in der Ankereinheit geführt und durch zweite Federmittel (32, 34) in Richtung auf den zugeordneten der Fluidanschlüsse vorgespannt ist,
**dadurch gekennzeichnet,**
**dass** die ersten Federmittel (38) eine Mehrzahl von miteinander zusammenwirkenden, bevorzugt zueinander abschnittsweise mechanisch parallel geschalteten, Federn aufweisen, wobei eine erste als Druckfeder ausgebildete Feder (40) sich von einem stationären Gehäuse-Widerlagerabschnitt (44) abstützt und eine zweite Feder (46) der ersten Federmittel mit einem axial bewegbar geführten, zum Anschlagen an das Gehäuse sowie zum axialen Mitnehmen durch die Ankereinheit ausgebildeten, axial bewegbaren Widerlagerabschnitt (48) zusammenwirkt.

2. Vorrichtung nach Anspruch 1,
**dadurch gekennzeichnet,**
**dass** das Ventilgehäuse den ersten (P) sowie den zweiten Fluidanschluss (T) einander gegenüberliegend und jeweils als Ventilsitz ausgebildet aufweist.

3. Vorrichtung nach Anspruch 2,
**dadurch gekennzeichnet,**
**dass** die erste und die zweite Verschlusseinheit mit Verschluss- und/oder Dichtmitteln (36) zum Zusammenwirken mit dem jeweils zugeordneten Ventilsitz ausgebildet ist.

4. Vorrichtung nach einem der Ansprüche 1 bis 3,
**dadurch gekennzeichnet,**
**dass** die Ankereinheit (22) eine Begrenzung, insbesondere Kanalwand, des mindestens einen Fluidkanals ausbildet.

5. Vorrichtung nach einem der Ansprüche 1 bis 4,
**dadurch gekennzeichnet,**
**dass** mindestens eine der Verschlusseinheiten gegen eine Rückstellkraft einer Druckfeder (36) als zweite Federmittel in einem Ankerkörper der Ankereinheit so federnd gehalten ist, dass zugeordnete Verschluss- und/oder Dichtmittel der Verschlusseinheit aus einer zugehörigen Stirnseite des Ankerkörpers federnd heraustreten können.

6. Vorrichtung nach Anspruch 5,
**dadurch gekennzeichnet,**
**dass** die Ankereinheit so mit mindestens einer der Verschlusseinheiten zusammenwirkt, dass ein an einer Ankerstirnseite vorgesehener Mitnehmerabschnitt einen maximalen Hub begrenzt und/oder bestimmt, um welchen die Verschluss- bzw. Dichtmittel aus der Stirnseite des Ankerkörpers heraustreten können.

7. Vorrichtung nach einem der Ansprüche 1 bis 6,
**dadurch gekennzeichnet,**
**dass** die Anker-Zwischenposition durch Wirkung einer der Spuleneinheit vorgeschalteten, eine Strom- oder Spannungssteuerung bewirkenden Steuereinheit und/oder durch Ansteuerung einzelner oder mehrerer von getrennt aktivierbaren Wicklungen der Spuleneinheit in die Anker-Zwischenposition verbringbar ist.

8. Vorrichtung nach einem der Ansprüche 1 bis 7,
**dadurch gekennzeichnet,**
**dass** die erste Feder und die zweite Feder zueinander unterschiedliche Federkräfte und/oder Feder-Steifigkeiten aufweisen.

9. Vorrichtung nach Anspruch 8,
**dadurch gekennzeichnet,**
**dass** eine Federkraft, Federlänge und/oder Feder-Steifigkeit der ersten Feder relativ zu einer Federkraft der zweiten Feder so ausgestaltet ist, dass als Reaktion auf eine das Verbringen der Ankereinheit in die Anker-Zwischenposition bewirkende erste elektromagnetische Stellkraft die erste Feder komprimiert wird und die zweite Feder keine oder eine geringere Kompression als die erste Feder durchführt, und als Reaktion auf eine das Verbringen der Ankereinheit in die zweite Anschlagposition bewirkende zweite elektromagnetischen Stellkraft die zweite Feder komprimiert wird.

10. Verwendung der Ventilvorrichtung nach einem der Ansprüche 1 bis 9 zum Befüllen oder Entleeren eines einen Stellkolben (14) betätigenden Stellzylinders (10) mit einem Volumenstrom eines Stellfluids, wobei der Stellzylinder dem weiteren Fluidanschluss (A) nachgeschaltet ist, das Stellfluid zum Befüllen durch den ersten Fluidanschluss (P) und zum Entleeren durch den zweiten Fluidanschluss (T) geführt wird.

11. Verwendung nach Anspruch 10, **dadurch gekennzeichnet, dass** der Stellkolben in dem Stellzylinder gegen eine Rückstellkraft eines Kraftspeichers, insbesondere einer Rückstellfeder (12), geführt ist.

## Claims

1. An electromagnetically actuable valve device having
a valve housing (20) which has a first fluid port (P) and a second fluid port (T), each being configured for the controlled opening and closing by moving an assigned first closure unit (28) and an assigned second closure unit (30) of the valve device, respectively,
and at least one other fluid port (A) which is provided on the valve housing and which forms a fluid channel toward the first and/or the second fluid port, said fluid channel being interruptible by the first and/or the second closure unit,
the first and the second closure unit being provided on or in an armature unit (22) which is guided movably along a longitudinal movement axis in the valve housing and which is drivable in reaction to current being supplied to a coil unit (24) of the valve device which is provided stationary on a coil housing (26) of the valve device,
the armature unit being movable on the valve housing between opposite first and second frontal stop positions,
the armature unit being preloaded in the first stop position, in which the first closure unit (28) closes the first fluid port (P), by first spring means (38, 40) engaging the valve housing,
the armature unit being configured for the controlled electromagnetic movement into an intermediate armature position which is provided along the longitudinal movement axis between the first and the second stop position and in which the first closure unit closes the first fluid port and the second closure unit closes the second fluid port, and at least one of the first and second closure units being guided axially movable on or in the armature unit and being preloaded in the direction of the assigned one of the fluid ports by second spring means (32, 34),
**characterized in that**
the first spring means (38) have a plurality of springs interacting with each other, preferably mechanically connected in parallel to each other in sections, a first spring (40) formed as a compression spring being supported by a stationary housing abutment portion (44) and a second spring (46) of the first spring means interacting with an axially movable abutment (48) which is guided axially movable and designed to abut against the housing and to be axially driven by the armature unit.

2. The device according to claim 1,
**characterized in that**
the first (P) and the second fluid port (T) of the valve housing are located opposite each other and are each formed as a valve seat.

3. The device according to claim 2,
**characterized in that**
the first and the second closure unit are formed with closure means and/or sealing means (36) for the interaction with the assigned valve seats.

4. The device according to any one of claims 1 to 3,
**characterized in that**
the armature unit (22) forms a boundary, in particular a channel wall, of the at least one fluid channel.

5. The device according to any one of claims 1 to 4,
**characterized in that**
at least one of the closure units is resiliently held in an armature body of the armature unit against a restoring force of a compression spring (36) as second spring means in such a manner that assigned closure means and/or sealing means of the closure unit can emerge resiliently from an associated end face of the armature body.

6. The device according to claim 5,
**characterized in that**
the armature unit interacts with at least one of the closure units in such a manner that a drive portion provided on an armature end face delimits and/or determines a maximum stroke by which the closure means and/or sealing means can emerge from the end face of the armature body.

7. The device according to any one of claims 1 to 6,
**characterized in that**
the armature unit can be moved into the intermediate armature position by the action of a control unit which is connected upstream of the coil unit and effects a current control or voltage control and/or by the controlling of individual or multiple ones of coil unit windings which can be activated separately.

8. The device according to any one of claims 1 to 7,
**characterized in that**
the first spring and the second spring have spring forces and/or spring stiffnesses which are different from one another.

9. The device according to claim 8,
**characterized in that**
a spring force, spring length and/or spring stiffness of the first spring is configured in such a manner relative to a spring force of the second spring that the first spring is compressed and the second spring does not compress or compresses less than the first spring in reaction to a first electromagnetic actuating force which causes the armature unit to move into the intermediate armature position, and that the second spring is compressed in reaction to a second electromagnetic actuating force which causes the armature unit to move into the second stop position.

10. A use of the valve device according to any one of claims 1 to 9 for filling or emptying an actuating cylinder (10) which actuates an actuating piston (14) with a volume flow of an actuating fluid, the actuating cylinder being connected downstream of the other fluid port (A), and the actuating fluid being guided through the first fluid port (P) for filling and through the second fluid port (T) for emptying said actuating cylinder.

11. The use according to claim 10, **characterized in that** the actuating piston is guided against a restoring force of an energy accumulator, in particular a restoring spring (12), in the actuating cylinder.

## Revendications

1. Dispositif de soupape actionnable électromagnétiquement ayant un boîtier de soupape (20) ayant un premier raccordement fluidique (P) et un deuxième raccordement fluidique (T), chacun étant formé pour l'ouverture et la fermeture contrôlée respectivement par le mouvement d'une première unité de fermeture (28) associée et d'une deuxième unité de fermeture (30) associée du dispositif de soupape, ainsi qu'au moins un autre raccordement fluidique (A) qui est prévu sur le boîtier de soupape et qui forme un canal de fluide vers le premier et/ou le deuxième raccordement fluidique, ledit canal de fluide étant interruptible par la première et/ou la deuxième unité de fermeture,
la première et la deuxième unité de fermeture étant prévues sur ou dans une unité d'ancrage (22) qui est guidée de manière déplaçable le long d'un axe longitudinal de mouvement dans le boîtier de soupape et qui peut être entraînée en réaction à une alimentation en courant d'une unité de bobine (24) du dispositif de soupape qui est prévue de manière fixe sur un boîtier de bobine (26) du dispositif de soupape, l'unité d'ancrage étant mobile sur le boîtier de soupape entre des
premières et deuxièmes positions de butée opposées,
l'unité d'ancrage étant précontrainte dans la première position de butée, dans laquelle la première unité de fermeture (28) ferme le premier raccordement fluidique (P), par des premiers moyens de ressort (38, 40) ayant prise sur le boîtier de soupape,
l'unité d'ancrage étant configurée pour un déplacement électromagnétique contrôlé dans une position intermédiaire d'ancrage qui est prévue le long de l'axe longitudinal de mouvement entre la première et la deuxième position de butée et dans laquelle la première unité de fermeture ferme le premier raccordement fluidique et la deuxième unité de fermeture ferme le deuxième raccordement fluidique et au moins une des premières et deuxièmes unités de fermeture étant guidée de manière axialement mobile sur ou dans l'unité d'ancrage et étant précontrainte dans la direction du raccordement fluidique associé des raccordements fluidiques par des deuxièmes moyens de ressort (32, 34),
**caractérisé en ce que**
les premiers moyens de ressort (38) ont une pluralité de ressorts interagissant les uns avec les autres, de préférence couplés mécaniquement en parallèle les uns aux autres par sections, un premier ressort (40) qui est formé comme ressort de compression s'appuyant sur une partie de butée de boîtier (44) fixe et un deuxième ressort (46) des premiers moyens de ressort interagissant avec une partie de butée (48) axialement mobile qui est guidée de manière axialement mobile et formée pour buter contre le boîtier ainsi que pour l'entraînement axial par l'unité d'ancrage.

2. Dispositif selon la revendication 1,
**caractérisé en ce que**
le premier raccordement de soupape (P) ainsi que le deuxième raccordement de soupape (T) du boîtier de soupape sont opposés l'un à l'autre et chacun est formé comme siège de soupape.

3. Dispositif selon la revendication 2,
**caractérisé en ce que**
la première et la deuxième unité de fermeture sont formées avec des moyens de fermeture et/ou d'étanchéité (36) pour l'interaction avec les sièges de soupape associés.

4. Dispositif selon l'une quelconque des revendications 1 à 3,
**caractérisé en ce que**
l'unité d'ancrage (22) forme une limite, notamment une paroi de canal, de l'au moins un canal de fluide.

5. Dispositif selon l'une quelconque des revendications 1 à 4,
**caractérisé en ce**
**qu'**au moins une des unités de fermeture est maintenu de façon résiliente dans un corps d'ancrage de l'unité d'ancrage contre une force de rappel d'un ressort de compression (36) comme deuxièmes moyens de ressort de manière que des moyens de fermeture et/ou d'étanchéité associés de l'unité de fermeture peuvent émerger de façon résiliente d'un côté frontal associé du corps d'ancrage.

6. Dispositif selon la revendication 5,
**caractérisé en ce que**
l'unité d'ancrage interagit avec au moins une des unités de fermeture de manière qu'une partie d'entraînement prévue sur une côté frontal d'ancrage délimite et/ou détermine une course maximale par laquelle les moyens de fermeture et/ou d'étanchéité peuvent émerger du côté frontal du corps d'ancrage.

7. Dispositif selon l'une quelconque des revendications 1 à 6,
**caractérisé en ce que**
l'unité d'ancrage peut être déplacée dans une position intermédiaire d'ancrage par l'action d'une unité de commande qui est connectée en amont de l'unité de bobine et effectue une commande de courant ou de tension et/ou par la commande d'enroulements individuels ou multiples d'enroulements de l'unité de bobine qui peuvent être séparément activés.

8. Dispositif selon l'une quelconque des revendications 1 à 7,
**caractérisé en ce que**
le premier ressort et le deuxième ressort ont des forces de ressort et/ou des raideurs de ressort qui sont différentes les uns des autres.

9. Dispositif selon la revendication 8,
**caractérisé en ce**
**qu'**une force de ressort, une longueur de ressort et/ou une raideur de ressort du premier ressort sont configurées par rapport à une force de ressort d'un deuxième ressort de manière que le premier ressort est comprimé et le deuxième ressort ne comprime pas ou comprime moins que le premier ressort en réaction à une première force d'actionnement électromagnétique qui provoque le déplacement de l'unité d'ancrage dans la position intermédiaire d'ancrage, et que le deuxième ressort est comprimé en réaction à une deuxième force d'actionnement électromagnétique qui provoque le déplacement de l'unité d'ancrage dans la deuxième position de butée.

10. Utilisation d'un dispositif de soupape selon l'une quelconque des revendications 1 à 9 pour le remplissage et le vidage d'un cylindre d'actionnement (10) qui actionne un piston d'actionnement (14) avec un débit volumétrique d'un fluide d'actionnement, le cylindre d'actionnement étant connecté en aval de l'autre raccordement fluidique (A), et le fluide d'actionnement étant guidé par le premier raccordement fluidique (P) pour le remplissage et par le deuxième raccordement fluidique (T) pour le vidage.

11. Utilisation selon la revendication 10, **caractérisée en ce que** le piston d'actionnement est guidé contre une force de rappel d'un accumulateur de force, notamment d'un ressort de rappel (12), dans le cylindre d'actionnement.
